# FASCICULE DE BREVET EUROPEEN

(11) **EP 1 110 186 B1**
(45) Date de publication et mention de la délivrance du brevet: **28.05.2003**
(21) Numéro de dépôt: 99929390.5
(22) Date de dépôt: 02.07.1999
(51) Int. Cl.: G07F 19/00

(54) **PROCEDE DE PAIEMENT ELECTRONIQUE**
VERFAHREN ZUM ELEKTRONISCHEN BEZAHLEN
ELECTRONIC PAYMENT METHOD

(30) Priorité: 03.07.1998 FR 9808717
(43) Date de publication de la demande: 27.06.2001
(73) Titulaire: SAGEM S.A., 75015 Paris (FR)
(72) Inventeur: SARRADIN, Jean-Louis, F-95000 Cergy (FR)
(74) Mandataire: Schmit, Christian Norbert Marie
(86) Numéro de dépôt international: FR9901605
(87) Numéro de publication internationale: WO00002168

(56) Documents cités:
- EP-A- 0 780 802
- EP-A- 0 848 360
- WO-A-94/11849
- WO-A-96/13814
- WO-A-96/25828
- WO-A-98/28900

## Description

La présente invention a pour objet un procédé de paiement électronique. Le but de l'invention est de permettre une très grande diffusion d'un tel mode de paiement, dont l'intérêt est la simplicité et, avec certaines précautions, une grande fiabilité.

On connaît les paiements par carte bancaire, notamment ceux dans lesquelles on prend une empreinte d'un embossage d'une carte de paiement, ou d'une carte de crédit, sur une fiche de paiement et dans lequel l'authenticité du paiement est acquise par la signature du titulaire de la carte au bas de la fiche. Selon les différentes législations, le paiement peut être considéré comme effectué dès l'apposition de la signature ou, dans certains pays, seulement lorsque le titulaire de la carte reçoit à son domicile un relevé des paiements et les accepte, ou tout au moins ne manifeste pas son désaccord d'acceptation. L'embossage révèle des caractères représentatifs de l'identité du titulaire de la carte, surtout de son numéro de compte auprès d'un organisme financier.

Ce type de paiement a été perfectionné par l'apposition à l'arrière des cartes de paiement ou carte de crédit d'une piste magnétique reproduisant, sous une forme mémorisée magnétiquement, les caractères embossés. Un lecteur de piste magnétique d'un terminal de paiement est capable de lire ces caractères et d'éditer la fiche de paiement qui suit par ailleurs un même cheminement d'acceptation.

En cas d'acceptation, un organisme financier du créancier opère les transferts de monnaie scripturale correspondants entre le compte du débiteur auprès d'un organisme financier et un compte du créancier.

Ce type de paiement a été à l'origine d'une fraude assez importante et a dû être sécurisé. Le système de sécurisation retenu a consisté à adjoindre aux informations relatives à l'identité bancaire proprement dite du porteur de la carte (notamment son numéro de compte dans l'organisme financier concerné et éventuellement son adresse), une chaîne de caractères complémentaire constituant une cohérence des informations d'identité proprement dites. Cette cohérence est calculée, en fonction d'un algorithme propre à l'organisme financier, sur la base des informations relatives à l'identité proprement dite. Cette cohérence est constituée par l'adjonction de cette chaîne de caractères dans la piste magnétique, mais pas dans les caractères embossés. A ce titre cette chaîne de caractères reste inconnue d'un fraudeur de base.

Actuellement les deux systèmes existent, le principe étant qu'un acheteur avisé ne doit effectuer des paiements avec une machine à prendre les empreintes embossées, un sabot, que s'il a une grande confiance dans le vendeur, créancier du paiement, ou ne doit accepter que des paiements magnétiques dans l'autre cas. En effet, pour la prise d'empreintes embossées, il faut surveiller que les fiches de paiement ne soient pas dupliquées par le commerçant, ou un fraudeur. Par exemple, avec une facturette papier dupliquée, un commerçant fraudeur pourrait fabriquer des fausses factures avec un autre sabot, celui d'un autre commerçant complice.

Le lecteur de piste magnétique du terminal de paiement électronique étant relié en temps réel, ou périodiquement en temps différé, à un serveur de données de sa banque, ce lecteur est aisément repérable comme serait par ailleurs repérable par ses facturettes un commerçant fraudeur. Les références de ce lecteur qui sont transmises en même temps que chaque transaction à la banque du créancier désignent le créancier à coup sûr. Mais surtout, l'insertion de la carte dans le lecteur s'effectuant à vue du porteur, celui-ci peut constater qu'elle n'est pas introduite dans un deuxième lecteur. En conséquence ce type de transaction a été rendu plus sûr, du moins du point de vue de la moralité des commerçants. En ce qui concerne les clients, le lecteur vérifie l'authenticité de la carte (contrôle d'authentification). Ensuite la carte contrôle le code confidentiel du porteur via le terminal lecteur. Pour l'authentification, le lecteur peut mettre en oeuvre une vérification de la carte avec les informations de cohérence. Le lecteur peut donc détecter les clients fraudeurs.

En ce qui concerne les clients, le système notamment par carte à puce permettant d'authentifier le porteur de la carte par composition d'un code secret permet, bien mieux qu'une signature qui peut être imitée, de vérifier que la carte n'a pas été volée. Pour simplifier, on retiendra que le terminal de paiement, au moment où une carte à puce lui est introduite, après l'authentification, lance une procédure de code secret. Les échecs de cette procédure sont comptés. Au-delà d'un nombre limité d'échecs (trois en général) la carte à puce est invalidée. En cas d'adéquation, la transaction peut être menée à terme.

Dans tous les cas évoqués ci-dessus le paiement nécessite la présence du commerçant (ou au moins du terminal de paiement de ce commerçant), de la carte de paiement du débiteur et de la présence du débiteur lui-même. Or cette concomitance n'est pas acquise dans le domaine de la vente par correspondance que celle-ci soit réalisée par téléphone, notamment par Minitel en France, ou même par Internet. En effet dans ce cas il n'y a pas de terminal de lecture magnétique, ou électronique, pour lire des informations d'identité du débiteur ainsi que des informations de cohérences, qui accompagnent le cas échéant ces informations d'identités.

En pratique, pour de telles transactions il est demandé au débiteur de composer sur un clavier (celui d'un combiné téléphonique, d'un micro-ordinateur relié sur Internet, ou d'un Minitel) les 13, 16 ou 19 ou autres caractères numériques embossés de son compte en banque (qui sont par ailleurs représentatifs également de la banque dans laquelle il a un compte), ainsi que d'une manière complémentaire ceux d'une date de validité. On retombe alors avec ce mode de paiement dans les difficultés des fraudes évoquées ci-dessus. En effet quiconque disposant du numéro de carte de paiement d'un tiers peut effectuer des paiements avec ce numéro (et au besoin avec la date de validité), en se faisant livrer à un endroit quelconque des biens ou des services achetés.

Par ailleurs les informations de cohérence ne sont pas disponibles pour les usagers, ils les ignorent, et même leur propre banque refusera de les leur donner. En conséquence, sans terminal de paiement autorisé par l'organisme financier, c'est-à-dire relié à cet organisme financier périodiquement ou en temps réel, il n'est pas possible d'effectuer des paiements sûrs, sans risque pour le débiteur de voir sa carte utilisée par des fraudeurs.

Dans le domaine de la vente par correspondance, notamment en France avec l'usage du Minitel, l'information de cohérence inconnue des usagers peut être remplacée par une relation contractuelle préalable. Ainsi, une personne identifiée par son adresse et éventuellement son numéro de compte en banque dans le fichier de l'organisme de vente par correspondance est également doté d'un numéro de contrat attribué par l'organisme de vente par correspondance. Ce numéro de contrat n'est pas le code secret de la carte bancaire et n'est pas non plus la chaîne de caractères de cohérence ignorée. Mais il constitue un substitut de cette information de cohérence puisque, sans ce numéro de contrat la carte de paiement ne pourra pas être utilisée. En donnant son numéro de contrat, le voleur se désigne et c'est un bon moyen pour éviter sa fraude avec des cartes de paiement volées.

Il reste donc le problème de toutes les ventes par correspondance, vente sur catalogue, ou vente par Internet, dans lesquelles l'acheteur n'a pas préalablement pris contact avec l'organisme de vente par correspondance pour se faire attribuer un numéro de contrat. Les seules solutions qui sont offertes dans ce cas consistent pour l'acheteur à diffuser les références de sa carte de paiement, avec les risques de spoliation envisagés ci-dessus.

Un mode de payement par telephone mobile est connu de l'art antérieur décrit dans WO-A-9 828 900 qui correspond aux caractéristiques du préambule de la revendication 1.

Ce problème va être résolu simplement en utilisant pour le paiement un téléphone mobile et, dans une solution principale, les circuits de gestion des communications d'un opérateur central de télécommunications auxquels l'utilisateur est affilié par abonnement pour constituer un message de transaction à établir : pour jouer le rôle du terminal de paiement. Ainsi, par exemple au moment de la souscription de son abonnement, cet utilisateur demandera à incorporer dans les circuits de son téléphone mobile, ou d'une carte à puce ou d'un jeton à puce utilisé avec ce téléphone mobile, des informations relatives à son identité (son numéro de compte en banque essentiellement) et de préférence également les informations de cohérence de sa carte bancaire. En quelque sorte le téléphone mobile comportera de ce point de vue une duplication de sa carte de paiement. Si l'utilisateur perd son téléphone mobile, ce téléphone mobile est néanmoins protégé par son propre code secret de démarrage comme le serait une carte à puce.

Au moment d'une transaction, l'utilisateur composera un numéro de téléphone spécifique de paiement, qui n'aboutit, dans cette solution principale, chez aucun interlocuteur si ce n'est à une fonction particulière dans les services centraux de l'opérateur. A cet instant la communication établie permet d'exécuter automatiquement un programme spécifique. Au cours de ce programme spécifique, l'utilisateur compose et fait envoyer un code relatif à l'identité du commerçant auprès duquel il veut faire une acquisition. Eventuellement ce code est relatif à la transaction elle-même si celle-ci est identifiée par ailleurs. Les services centraux de l'opérateur de télécommunications composent alors un message de paiement. Ce message de paiement est établi sur la base de l'identification du client débiteur (connue par le téléphone mobile et communiquée automatiquement à l'opérateur de télécommunications) et sur la base d'un code de créancier (communiqué par l'utilisateur au moment où il envoie le code de commerçant après composition). Les services centraux de l'opérateur retrouvent à partir de ce code de créancier, ou de ce code de transaction envoyé par l'utilisateur du téléphone, l'identité du commerçant et éventuellement un montant de transaction. Ce montant peut être autrement composé par l'utilisateur du téléphone, à moins qu'il ne corresponde à la transaction.

Une fois que ce message de paiement est composé, les services centraux de l'opérateur de télécommunications effectuent en plus l'envoi du message correspondant à un organisme financier qui correspond soit au débiteur, soit au créancier, mais de préférence au créancier. Cet organisme financier effectue alors la transaction comme dans le cas des paiements avec des terminaux électroniques communs. En quelque sorte, en agissant ainsi l'opérateur de télécommunications se substitue, avec tous ses services, à un terminal de paiement électronique. Ce terminal de paiement électronique ainsi réalisé est particulier en ce sens qu'il est universel. Il concerne tous les commerçants et tous les organismes financiers. Il suffit seulement que l'opérateur puisse être en relation avec les différents organismes financiers. Deux autres variantes seront également décrites par la suite dans lesquelles la constitution du message de paiement va être partagée.

L'invention, telle que définie à la revendication 1, a donc pour objet un procédé de paiement électronique dans lequel
- on complète un message de paiement comportant une information d'un montant d'une transaction, une information d'identité d'un débiteur de ce montant et une information d'identité d'un créancier de ce montant,
- on envoie ce message à un serveur de données d'un organisme financier,
- le serveur de cet organisme financier opère des transferts de monnaie scripturale correspondant à ce paiement,
caractérisé en ce que
- on émet à partir d'un téléphone mobile, et en direction d'un système central d'un opérateur, l'information d'identité du débiteur,
- on constitue, dans ce système central, le message de paiement à partir de l'information d'identité de débiteur reçue, et d'une information d'identité de créancier,
- on envoie le message ainsi constitué à un serveur de données d'un organisme financier.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- Figure 1 : la représentation schématique d'un procédé de paiement électronique de l'état de la technique ;
- Figure 2 : une représentation schématique des moyens mis en oeuvre dans le procédé de l'invention ;
- Figure 3 : une représentation schématique des moyens du téléphone mobile mis en oeuvre dans le procédé de l'invention ;
- Figure 4 : un organigramme de déroulement des étapes du procédé de l'invention ;
- Figure 5 : une présentation comparative des différentes variantes de l'invention.

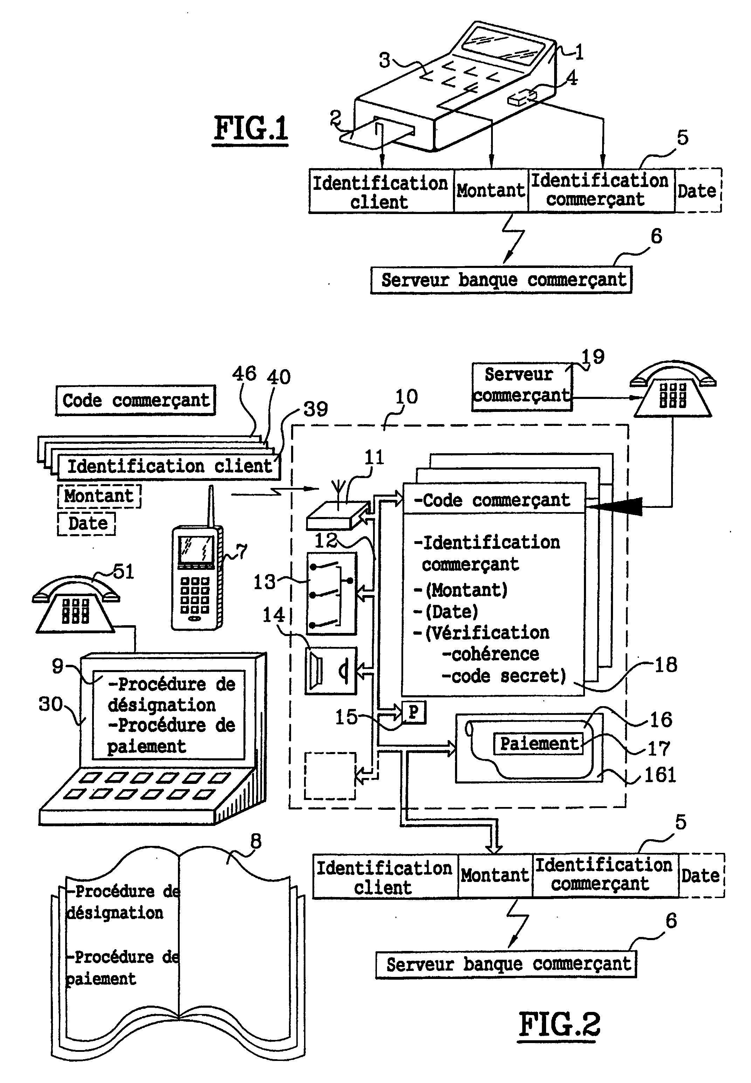

La figure 1 montre les moyens utilisés dans l'état de la technique pour effectuer un paiement électronique. Dans un terminal 1 de paiement électronique, on insère une carte 2 de paiement, carte à puce ou carte magnétique. Avec un clavier 3 du terminal 1, le commerçant compose le montant de la transaction. En pratique cette opération comporte une authentification de la carte et une authentification du porteur par une composition de code secret mais qui n'est pas pertinente au premier chef ici. Ce faisant un message 5 de paiement ainsi constitué par le terminal 1 comporte l'identification du débiteur, (c'est-à-dire le client), le montant de la transaction, et l'identification du créancier (c'est-à-dire le commerçant). L'identification du débiteur est prélevée dans la carte 2. L'identification du créancier est prélevée dans le terminal 1. Le montant est composé au clavier. D'autres informations sont également données, notamment la date de la transaction, la date de validité de la carte de paiement 2, ainsi que d'autres types d'informations. Dans l'identification client, figure l'identification proprement dite et, de préférence, la chaîne de caractères de cohérence qui authentifie intrinsèquement l'identité du client. Dans l'identification du commerçant on retrouve les mêmes éléments. Ceux-ci sont disponibles dans une mémoire 4 du terminal 1.

Le terminal 1 est relié par une ligne téléphonique (filaire, hertzienne ou autres) avec un serveur 6 de la banque du créancier. Le serveur 6 de cette banque est capable de recevoir le message 5 envoyé, et de traiter la transaction financière qui lui correspond. D'une manière connue, le serveur 6 de la banque du commerçant émet un ordre de prélèvement du compte du client pour le débiter et pour créditer le compte du commerçant qu'elle gère.

La figure 2 montre la modification de cette transaction notamment pour la rendre accessible avec sécurité à la vente par correspondance. Ce mode de paiement peut toutefois se substituer aux paiements avec terminal 1, si le commerçant l'accepte et s'il s'est organisé en conséquence. On verra par la suite comment, plutôt qu'une substitution pure et simple qui appelle la méfiance du commerçant, celui-ci peut participer avec ses équipements à l'opération de paiement. Dans ces cas, un client disposant d'un téléphone mobile 7 consulte un catalogue 8 de vente par correspondance ou même consulte une session 9 de connexion sur Internet. Eventuellement il consulte la vitrine d'un commerçant. Il détecte dans ces consultations un bien ou un service qu'il veut acquérir. Les informations qui sont mises à sa disposition par le vendeur sont alors essentiellement des indications relatives à une procédure de désignation du bien ou du service acheté, et d'une procédure de paiement.

Ces deux notions ne sont toutefois pas nécessairement complètement séparées, il est possible en effet notamment au cours d'une session Internet 9, qu'un seul produit soit achetable auprès du commerçant, auquel cas la désignation du bien ou du service sera implicitement comprise dans la désignation du commerçant. On verra par la suite comment peut être menée à terme, avec toutes les variantes possibles, la procédure de désignation du bien ou du service choisi par le client. Pour l'instant, seul est important le fait que soit mis à la disposition de l'acheteur une procédure de paiement.

Cette procédure de paiement peut comporter une succession d'opérations à effectuer par l'acheteur mais elle comportera essentiellement l'envoi d'un code commerçant. En effet, comme on l'a dit ci-dessus le terminal de paiement auquel on va s'adresser est un terminal universel, il n'est pas comme le terminal 1 automatiquement muni d'une mémoire 4 avec l'identification d'un commerçant spécifique ni non plus automatiquement connecté à un serveur 6 de données de la banque du commerçant. Par conséquent, dans le catalogue 8 dans la session 9 ou dans sa procédure de paiement, le commerçant doit indiquer un code qui le concerne dans les services de l'opérateur de télécommunications. Ce code pourrait même être l'identification complète du commerçant comme vu plus haut. Il pourra de préférence être plus simple, notamment comporter par exemple un nom commercial suivi, éventuellement, d'un numéro d'article vu dans le catalogue. Ainsi pour une société nommée VPC de vente par correspondance, et pour un article de numéro 0001, le code commerçant pourra être VPC, ou VPC 0001 selon le cas.

Le téléphone mobile 7 va envoyer, pour le paiement, dans un système central 10 d'un opérateur de télécommunications publiques avec des mobiles, un message comportant essentiellement le code commerçant vu ci-dessus (VPC, ou VPC 0001) ainsi que l'identification client (c'est-à-dire l'identité du client et de préférence la chaîne de caractères de cohérence). D'une manière optionnelle le client enverra avec son téléphone mobile 7 le montant de la transaction et la date de la transaction. Le montant de la transaction et la date de la transaction ne sont pas nécessaires si l'article acheté est déjà identifié implicitement dans le code commerçant. De même ils ne sont pas nécessaires si le commerçant ne vend qu'un seul article. La date peut par ailleurs être apportée dans le message de paiement par l'opérateur.

Pour l'envoi des deux composantes essentielles, le code commerçant et l'identification client, il n'est demandé à l'utilisateur du téléphone mobile que de composer le code commerçant. L'identification client étant préalablement contenue dans les mémoires de ce téléphone mobile sera adjointe au message d'une manière automatique. Après cette composition du code commerçant, le client se met en relation avec le système central 10. A cette fin il dispose d'un numéro de téléphone spécifique.

Le système central 10 de l'opérateur de télécommunications comporte au moins une station de base 11 en relation avec le téléphone mobile par voie hertzienne, et avec les différents circuits de ce système central par l'intermédiaire d'un bus 12. D'un manière connue ces circuits comporteront des circuits 13 de commutation et des circuits annexes. Les circuits 13 servent à la fonction principale d'un opérateur de télécommunications : à établir des liaisons entre différents interlocuteurs. Les circuits annexes peuvent être variés et comporter par exemple des boîtes vocales 14. Le système central 10 est administré par un processeur 15 qui met en oeuvre un programme 16 général. Le programme 16 est contenu dans une mémoire 161 reliée au bus 12. Ce programme 16 sera complété par un sous programme 17 de paiement électronique. Le sous programme 17 a pour objet de reconstituer le message 5 et de l'envoyer à un serveur 6 de données de la banque du commerçant. Le sous programme 17 est la fonction spécifique de paiement lancée chaque fois qu'un accès est effectué sur le numéro de téléphone spécifique.

Dans ce but, le système central 10 comportera une mémoire de paiement 18 dont chaque enregistrement peut être adressé par un code commerçant reçu du téléphone mobile 7. Dans un enregistrement correspondant à un code commerçant, on trouve ainsi une information relative à l'identification du commerçant, notamment à son compte en banque, et à une identification de la banque du commerçant. Cette dernière information sera notamment utile pour, une fois que le message 5 aura été constitué, l'envoyer au serveur 6 de la banque du commerçant.

En variante, la mémoire 18 sera réduite, et ne comportera qu'une identification de commerçant permettant au service central 10 de se connecter, en temps réel ou en temps différé, sur un serveur de données 19 du commerçant afin d'y puiser les informations correspondant à la transaction souhaitée par le porteur du téléphone mobile 7. Ainsi, dans le cas où le code commerçant comporterait les informations VPC 0001, le système central 10 composera un numéro de téléphone (correspondant au commerçant VPC et qu'il connaît dans sa mémoire 18). Ce numéro de téléphone est celui du serveur 19 du commerçant. Par une requête automatique, le système central 10 pourra obtenir de ce serveur 19 d'une part l'identification bancaire de ce commerçant et d'autre part éventuellement le montant de la transaction relative à l'article correspondant 0001.

En variante le processeur 15, en exécution du programme 17, peut apporter la date du jour au message 5 ainsi qu'effectuer la vérification des identifications du client et du commerçant. En effet dans les deux cas il recevra des entités 7 et 19 des identités proprement dites ainsi que les chaînes de caractères de cohérence. Dans une variante préférée également le sous programme 17 pourra lancer une vérification de code secret, pour authentifier le porteur du téléphone mobile. Ou le sous programme 17 pourra faire faire cette vérification par un circuit contenu dans le téléphone mobile 7.

En résumé l'identification client est envoyée par le téléphone mobile 7 au moment de la transaction. L'identification du commerçant est envoyée par le serveur commerçant 19. Elle est envoyée préalablement pour être stockée dans une mémoire 18, ou à la demande, en temps réel ou en temps différé par rapport à l'instant de la transaction. Le montant peut être composé par l'utilisateur du téléphone mobile 7. Il peut être préalablement stocké dans la mémoire 18. Ou encore il peut être envoyé à la demande par le serveur 19. L'avantage d'utiliser le serveur 19, et donc la communication entre le système central 10 et ce serveur 19, pour parfaire la transaction est que le commerçant peut changer de banque comme il veut et que d'autre part le système central 10 n'est pas responsable juridiquement de la transaction puisqu'il ne fait que transcrire des informations qu'on lui donne pour composer le message 5. Dans un enregistrement de la mémoire 18 correspondant à un code commerçant, on trouvera donc de préférence des moyens d'identification du commerçant, avec la chaîne de caractères de cohérence, et des moyens d'identification de sa banque, c'est-à-dire l'expression du protocole de connexion utilisable pour transmettre ensuite le message 5 à cette banque.

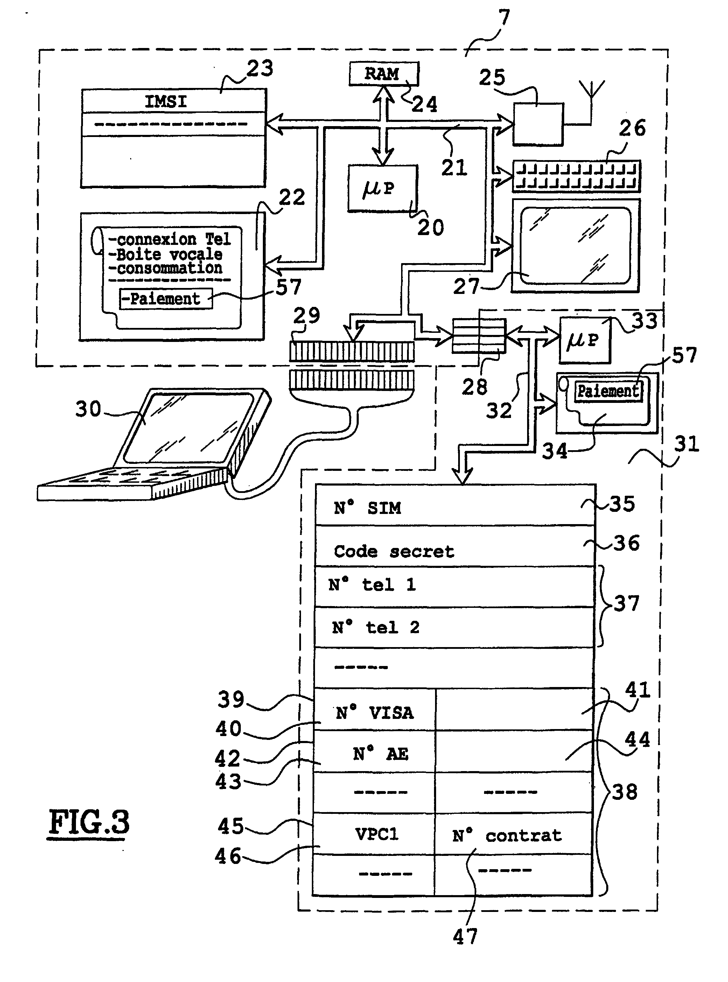

La figure 3 montre une modification fonctionnelle d'un téléphone mobile pour le faire fonctionner selon l'invention. Le téléphone mobile 7 comporte d'une manière connue un microprocesseur 20 relié par un bus 21, à une mémoire programme 22, à une mémoire de données 23, à une mémoire de travail 24, à un circuit d'émission réception 25, à un clavier 26, et à un écran 27. Pour la relation avec le monde extérieur, le bus 21 est encore relié à un connecteur 28, de carte à puce ou similaire ainsi qu'à un connecteur d'embase 29. Le connecteur 29 sert la plupart du temps pour recharger une batterie (non représentée) du téléphone mobile. Mais il peut également servir pour connecter le téléphone 7 à un micro-ordinateur 30. Le micro-ordinateur 30 est par exemple celui à partir duquel on a lancé une session Internet 9. Cependant il ne faut pas confondre la session Internet (qui pourrait, elle aussi, utiliser le téléphone mobile comme moyen de communication), et la session de paiement dans laquelle on met en oeuvre le procédé de paiement selon l'invention.

Le connecteur de carte à puce 28 est optionnel quoique correspondant à une solution préférée. En effet celui-ci permet de connecter un circuit à puce 31 amovible comportant lui aussi un bus 32 relié au connecteur 28, un microprocesseur 33, une mémoire programme 34 et une mémoire de données 35.

Dans la mémoire de données 23 figurent diverses informations mais notamment un numéro dit IMSI, pour International Mobile Set Identification, qui permet d'identifier au cours d'une communication du téléphone mobile 7 avec une station de base 11 quel est le poste téléphonique mobile qui est en cours d'utilisation. Par opposition, dans la mémoire 35 figurera un numéro dit SIM correspondant, mais pour l'opérateur de télécommunications cette fois, à l'identité de l'utilisateur du téléphone mobile. Cette identité est en fait ici en correspondance biunivoque du numéro de téléphone affecté par cet opérateur à l'utilisateur de la carte 31. Le circuit à puce 31 est d'ailleurs appelé couramment carte SIM pour cette raison.

Cette mémoire 35 comporte d'une manière connue différentes zones non volatiles dont notamment une zone 36 comportant un code secret. Lors de l'utilisation du téléphone mobile avec la carte 31, au moment de la mise en service, le programme de la mémoire programme 34 vérifie que le code secret composé par l'opérateur sur le clavier 26 correspond bien à celui enregistré dans la zone 36. Il est également connu d'y disposer dans des zones mémoires telles que 37 des numéros de téléphones préférés. L'opérateur peut les faire apparaître sur l'écran 27 et les sélectionner pour une composition automatique sans avoir à frapper tous les chiffres de ces numéros de téléphone. Le numéro de téléphone spécifique pourra en faire partie.

La carte SIM 31 comportera dans la mémoire 35 une zone 38 dans laquelle seront enregistrées les informations relatives aux paiements effectués par le porteur du téléphone 7. Par exemple dans un enregistrement 39 de la zone 38, on a mémorisé le numéro de la carte VISA du titulaire de la carte SIM 31 dans une première zone 40, et la chaîne de caractères de cohérence correspondant à ce numéro 40 dans une zone 41. Si le titulaire de la carte SIM 31 possède par ailleurs une carte American Express cette indication sera portée dans un enregistrement 42 dans les zones 43 et 44 respectivement. Et ainsi de suite il pourrait y avoir autant d'enregistrements que le titulaire de la carte SIM 31, ou du téléphone mobile, dispose de comptes financiers différents. De même dans un enregistrement 45, on a fait figurer les références d'une société de vente par correspondance VPC 1 et du numéro de contrat souscrit avec elle en zones 46 et 47 respectivement.

Le choix de la carte SIM 31 pour contenir toutes les informations 39 à 47 est préféré parce que ce choix permet à l'utilisateur, détenteur de la carte SIM 31, d'utiliser n'importe quel téléphone mobile 7 pour effectuer la transaction. En outre, il est plus facile pour un opérateur de recevoir ou de modifier des cartes SIM qu'il édite que de modifier des téléphones mobiles. Néanmoins il serait possible d'incorporer, notamment dans les pays où les caractères amovibles des informations de la carte SIM 31 ne sont pas utilisés, ces informations dans la mémoire 23.

Plutôt que d'avoir le prélèvement de l'identification du commerçant dans le centre serveur 19 par l'intermédiaire du système central 10, il est possible, en connectant simultanément le micro-ordinateur 30 sur une session Internet et sur le connecteur 29, ou en gardant en mémoire les résultats de la session Internet, de transmettre sur le bus 21 les informations d'identification du commerçant, et même de montant, à partir du téléphone mobile 7 pour composer le message électronique de paiement 5. Cependant, même dans ce cas le système central 10 est préféré puisque c'est celui-ci qui effectuera en définitive la vérification de cohérence. En outre, les messages 5 sont de toute manière édités par le système 10 pour être transmis au serveur 6 de la banque du commerçant. Surtout la liaison entre le poste téléphonique mobile 7 et le système central 10 n'est pas une liaison Internet en réseau, ouverte à tous, elle est une liaison privée donc nettement mieux protégée. Quand l'opérateur est ainsi impliqué dans le traitement : on définit un protocole d'échange entre le téléphone mobile 7 et l'opérateur. Ce protocole tient compte des différentes options offertes : connaissance préalable de l'identification du commerçant, prélèvement en temps réel, ou communication par le client.

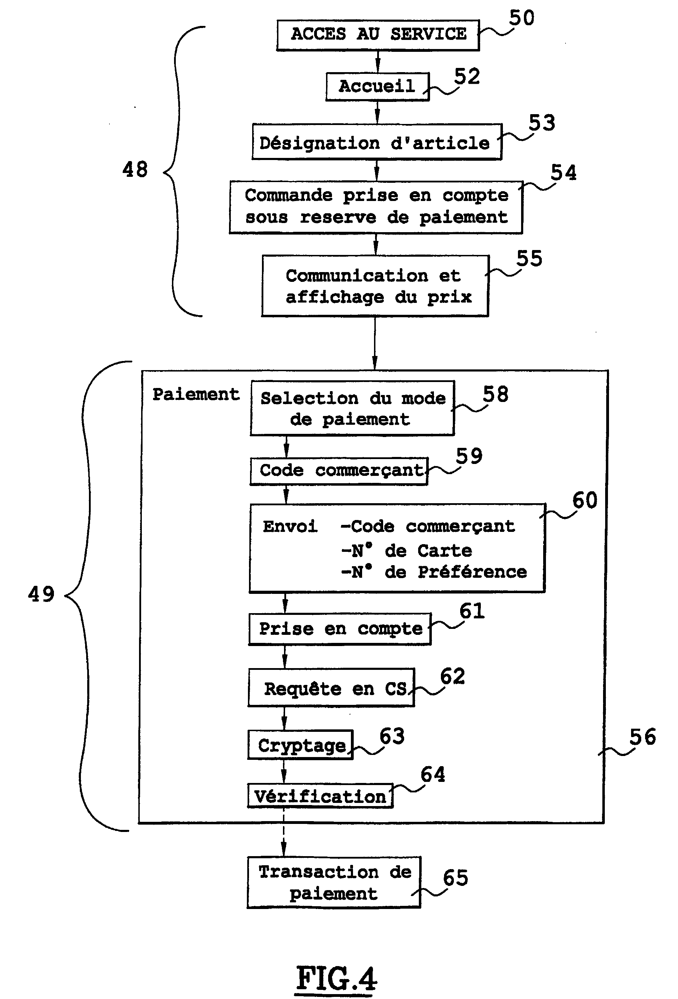

La figure 4 montre les opérations 48 mises en oeuvre pour effectuer la procédure de désignation et les opérations 49 effectuées selon l'invention pour la procédure de paiement. La procédure 48 de désignation n'est pas nécessairement effectuée par la liaison par téléphone mobile, en utilisant le système central 10 montré sur la figure 2. Elle sera de préférence lancée par le micro-ordinateur 30 au cours d'une session Intemet 9. La procédure 48 comporte ainsi une étape 50 d'accès aux services du commerçant. Dans ce but l'utilisateur compose par exemple avec un modem 51 (figure 2) de son micro-ordinateur 30 le numéro de téléphone et le code d'accès qui lui permettent de visualiser sur l'écran de son micro-ordinateur 30 les informations utiles à la transaction.

Lorsque l'accès 50 aux services est effectué, une opération d'accueil 52 s'exécute. Dans le cas où il s'agirait d'une session Internet, l'écran du micro-ordinateur 30 va montrer tous les détails de la transaction. Cette visualisation peut être autrement provoquée sur l'écran du téléphone mobile 7. Dans ce cas néanmoins, les informations seront plus laconiques. Eventuellement si on utilise seulement un téléphone, et même pas un téléphone mobile, il peut y avoir un bip sonore montrant que la connexion est établie, ou voire même rien du tout. Dans ce cas la procédure de désignation apparaissant sur le catalogue 8 indique ce à quoi doit s'attendre l'utilisateur client. Après cet accueil le client désigne dans une opération 53 l'article ou le service qu'il veut acquérir. Il suit les indications qui lui sont données à cet effet soit au cours de la session, soit dans le catalogue 8. Cette désignation 53 est suivie d'une prise en compte de commande 54 par le commerçant, éventuellement sous réserve de paiement. L'opération 54 termine la procédure 48 de désignation. Cette désignation 53 et cette prise en compte de commande 54 utilisent des mêmes moyens de visualisation, ou de communication, que l'étape 52.

La procédure de paiement 49 comporte une communication ou un affichage du prix. Comme vu précédemment, celui-ci peut avoir été visualisé sur un écran, communiqué par une boîte vocale, indiqué dans le catalogue 8 ou autre. Cette communication du prix 55 est préalable. La procédure 56 de paiement proprement dite correspond à un sous programme 57 contenu dans la mémoire programme 22 du téléphone mobile 7, ou bien de préférence contenue dans la mémoire programme 34 de la carte SIM 31. Compte tenu du caractère universel du programme 57, celui-ci pourra néanmoins être incorporé dans tous les téléphones mobiles 7. Le programme 57 comportera de préférence une première étape 58 par laquelle le porteur pourra sélectionner celui des enregistrements 39, 42 ou 45 qu'il choisit (compte tenu de ses disponibilités financières sur ses différents comptes) pour effectuer la transaction.

Une fois cette sélection faite, ou au préalable, le programme 57 demandera en une étape 59 au client de taper le code commerçant évoqué ci-dessus. Ce code commerçant est lisible sur le catalogue 8 ou dans la session 9. Une fois les opérations 58 et 59 réalisées, l'utilisateur provoque avec le téléphone mobile 7 l'envoi au numéro de téléphone spécifique, au cours d'une opération 60, de ces différentes informations : identification de client comportant de préférence la chaîne de caractères de cohérence et code commerçant. Cet envoi est provoqué par l'appui sur une touche du téléphone mobile, correspondant à des indications de procédure données dans un manuel du téléphone mobile, ou mieux, au cours de la session 48. Le système central 10 reçoit alors ce message, et le prend en compte au cours d'une opération 61. L'étape 61 pourra être suivie, en application du programme 17 contenu dans la mémoire 16 du système central d'une requête en vérification de code secret 62 , d'un chiffrage 63 et ou d'une vérification 64 de ce que la carte est bien détenue par son propriétaire.

L'étape 61 comporte surtout la constitution du message 5, par prélèvement des informations utiles dans la mémoire 18 (ou dans le serveur 19). L'étape 61 comporte enfin un appel du serveur 6 de la banque du commerçant. Cette étape 61 est suivie d'une étape 65 de traitement du paiement, comme dans l'état de la technique, par la banque du commerçant.

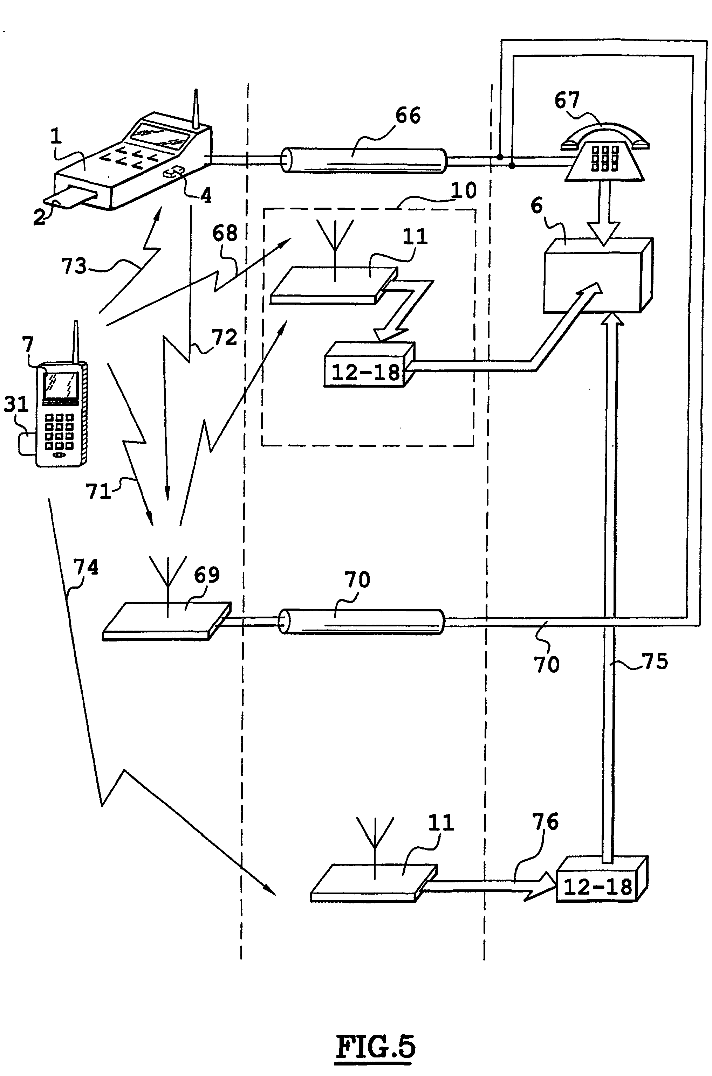

La figure 5 résume les différentes manières de mettre en oeuvre l'invention. On y distingue le téléphone mobile 7, le terminal classique de paiement 1 et une carte à puce 31 utilisable pour faire fonctionner le téléphone mobile 7 et une carte à puce 2 pour payer avec le terminal 1. Selon l'état de la technique, une liaison 66 relie le terminal 1, en temps réel ou en temps différé, à un modem 67 et au serveur 6 de l'organisme financier du commerçant propriétaire du terminal 1. Selon la description précédente de l'invention, le téléphone mobile 7 entre en relation avec les circuit 10 de l'opérateur de téléphonie mobile pour que celui-ci compose le message de paiement. Ces circuits 10 comportent une station de base 11 (propriété de l'opérateur de téléphonie mobile) et le système 12-18 de traitement évoqué ci-dessus. Dans cette première description de l'invention, le téléphone mobile 7 entre en relation avec la station de base 11 par une relation hertzienne 68.

Selon une variante de l'invention, les moyens de constitution du message de paiement pourraient être réunis autre part que chez l'opérateur de téléphonie mobile (dans les circuit 10 décrits ci-dessus) et même autre part que chez le commerçant (avec la station de base privée 69). Notamment la station de base 69 pourrait être remplacée par une station de base 11 publique. Selon cette deuxième variante cependant, le réseau public de téléphonie mobile n'intervient que pour acheminer une liaison téléphonique privée. Dans ce dernier cas, les circuits 12-18 eux (pour la partie qui concerne la construction du message 5) se trouveront dans des locaux à disposition de l'organisme financier. Par exemple, les circuits 12-18 sont situés dans un immeuble de cet organisme et relié à l'intérieur de cet immeuble par une liaison privée 75 au serveur 6. Dans ce cas l'acheteur peut, dans la rue, en remarquant par exemple une affiche publicitaire proposant un bien ou un service, acheter immédiatement ce bien ou ce service. Il compose dans ce cas avec son téléphone mobile 7 le numéro de téléphone affiché sur l'affiche publicitaire. Ce numéro de téléphone le met en relation, via sa liaison hertzienne 74 à la station de base publique 11, et via une liaison téléphonique 76 de cette station de base 11, avec les circuits 12-18 installé dans les locaux de l'organisme financier qui gère le serveur 6. Les liaisons 74 et 76 passent, en une communication privée, sur le réseau public. Ces liaisons permettent d'établir le message de paiement puisque les circuits 12-18 comportent (par le numéro de téléphone composé dans ce cas) l'identité du commerçant par le téléphone mobile 7, l'identité du client, et, par une procédure complémentaire ou des indications préalables (0001) données par le client, le montant de la transaction envisagée.

On observera que, tant dans la version de base que dans les deux variantes, les liaisons 66, 70, 74 et 76 sont des liaisons privées. Elles sont de ce fait bien plus résistantes aux fraudes que ne pourraient l'être des liaisons de type accessibles à tous comme on en rencontre avec le réseau Internet.

De cette façon un définit avec l'invention le téléphone mobile 7 comme un terminal porteur électronique de paiement, qui possède tout ou partie des fonctions du terminal 1 classique. Selon l'invention, ces fonctions sont cependant démembrées. La constitution du message 5 de paiement est réalisée petit à petit dans le cadre de la transmission. Une permanence de l'invention est que l'identité du client est transmise par une liaison hertzienne 68, 71 ou 74 entre le téléphone mobile et le serveur 6 de la banque. Un autre moyen essentiel de l'invention est que, dans cette transmission, l'organe, le système dit central, qui reçoit cette identité au moins transmise sur une partie de son parcours par voie hertzienne, complète le message de paiement.

A titre d'étape de vérification 64, notamment pour des paiements effectués entre des particuliers, un d'eux étant un créancier de somme d'argent car il est fournisseur d'une chose ou d'un service, et l'autre étant le client acheteur de la chose ou du service et débiteur de la somme d'argent, on peut procéder de la manière suivante. Une fois que le message de paiement a été constitué et envoyé par ou avec le concours de l'opérateur selon les différentes formes de l'invention, le système central de cet opérateur prélève dans la mémoire 18, en correspondance du code commerçant (donc ici en correspondance des coordonnées du particulier fournisseur), un numéro de téléphone, de préférence celui d'un téléphone mobile. Ce système central envoie alors immédiatement à ce particulier fournisseur un message pour lui confirmer l'achèvement du paiement. Le message peut être un message vocal, automatique, si le téléphone appelé du particulier fournisseur est un téléphone classique. Il peut être un message enregistrable, au moins temporairement dans la mémoire du téléphone mobile 7, voire du circuit SIM31. Ce message peut dans ce dernier cas être un message de type SMS, Short Message Service, petit message court, présentant l'avantage d'être visible sur l'écran du téléphone mobile de ce particulier fournisseur. Au vu de ce message téléphonique d'achèvement de traitement du paiement, le particulier fournisseur peut remettre effectivement dans les mains du particulier client la chose ou le service. Bien entendu cette confirmation peut aussi être envisagée dans le cas de paiement à des commerçants.

## Revendications

1. Procédé de paiement électronique dans lequel
- on émet (68, 71, 74) à partir d'un téléphone mobile (7) d'un débiteur, et en direction d'un système central (10) d'un opérateur (13), une information relative à un montant d'une transaction, et une information relative à une identité (39) d'un créancier,
- on complète (18, 19), dans ce système central, un message de paiement à partir de l'information d'identité de créancier reçue, à partir d'une information de compte de débiteur, et à partir de l'information de montant de transaction,
- on envoie ce message de paiement à un serveur (6) de données d'un organisme financier,
- le serveur de données de cet organisme financier opère des transferts de monnaie scripturale correspondant à ce paiement,
**caractérisé en ce que**
- une information de compte de créancier et ou une valeur de montant nécessaire à ce message est prélevée dans une mémoire d'un serveur (19) de données à la disposition du créancier, en utilisant l'information relative à l'identité de créancier comme adresse, directe ou indirecte, de ce serveur de données du créancier.

2. Procédé selon la revendication 1 **caractérisé en ce que**
- l'opérateur est un opérateur de téléphonie mobile publique,
- au moment de l'émission (68), on émet également un code relatif à l'identité du débiteur,
- on constitue le message de paiement à partir d'une information d'identité du débiteur correspondant à ce code.

3. Procédé selon la revendication 1 **caractérisé en ce que**
- on émet (71) l'information d'identité du débiteur sur un réseau de téléphonie privée (69) du créancier,
- on compose le message de paiement dans (71-73) ce réseau, et
- on l'envoie (70) à un organisme financier du créancier.

4. Procédé selon la revendication 1 **caractérisé en ce que**
- on émet (74) l'information d'identité sur un réseau de téléphonie publique, dans le cadre d'une communication privée (75), et
- on compose et on envoie le message de paiement à un interlocuteur de cette communication privée au cours de son déroulement.

5. Procédé selon l'une des revendications 1 à 4, **caractérisé en ce que**
- l'information d'identité de créancier est puisée dans une mémoire (18) du système central en utilisant le code comme adresse dans cette mémoire.

6. Procédé selon l'une des revendications 1 à 5, **caractérisé en ce qu'**on utilise comme identité de débiteur un numéro de compte de ce débiteur dans un organisme financier.

7. Procédé selon la revendication 6, **caractérisé en ce que**
- le débiteur sélectionne dans une mémoire de son téléphone mobile une identité de débiteur à envoyer parmi plusieurs (38),
- cette identité de débiteur correspondant à un des comptes de ce débiteur dans un ou des organismes financiers.

8. Procédé selon l'une des revendications 1 à 7, **caractérisé en ce que**
- dans l'information d'identité du débiteur on transmet une information d'identité proprement dite et une chaîne de caractère de cohérence, et
- on vérifie (61) dans le système central l'authenticité du message de paiement par traitement des caractères de cohérence.

9. Procédé selon l'une des revendications 1 à 8, **caractérisé en ce que**
- on provoque avec le système central une session (62-64) de vérification de code secret relatif au débiteur.

10. Procédé selon l'une des revendications 1 à 9, **caractérisé en ce que**
- pour envoyer le message à un serveur (6) d'un organisme financier correspondant à ce code, le système central lit dans une de ses mémoires ou dans une mémoire d'un serveur de données du créancier des informations de connexion de cet organisme financier, et
- le système central se connecte à ce serveur de données de cet organisme financier.

11. Procédé selon l'une des revendications 1 à 10, **caractérisé en ce que**
- pour émettre à partir du téléphone mobile, on enregistre préalablement dans une mémoire (35) de ce téléphone mobile les informations d'identité de débiteur.

12. Procédé selon la revendication 11, **caractérisé en ce qu'**on réalise la mémoire de ce téléphone mobile sous la forme d'une mémoire amovible (31), par exemple du type carte à puce ou jeton à puce.

13. Procédé selon l'une des revendications 1 à 12, **caractérisé en ce que**
- on ajoute la date au message (5) de paiement.

14. Procédé selon l'une des revendications 1 à 13, **caractérisé en ce que**
- l'organisme financier correspondant au code est un organisme dans lequel le créancier a un compte.

15. Procédé selon l'une des revendications 1 à 14, **caractérisé en ce que**
- on envoie au créancier un message téléphonique lui indiquant l'achèvement du traitement du message de paiement.

## Claims

1. A method of electronic payment in which
- an information item relating to a transaction amount and an information item relating to an identity (39) of a creditor is transmitted (68, 71, 74) from a mobile telephone (7) of a debtor to a central system (10) of an operator (13),
- a payment message is compiled (18, 19) in this central system on the basis of the received information item regarding the identity of the creditor, on the basis of an information item regarding the debtor's account, and on the basis of the information item regarding the transaction amount,
- this payment message is sent to an online database server (6) of a financial institution,
- the online database server of this financial institution makes transfers of scriptural money corresponding to this payment
**characterised in that**
- an information item regarding the creditor's account and/or an amount value required for this message is taken from a memory of an online database server (19) that is available to the creditor, using information about the creditor's identity such as the address, direct or indirect, of the creditor's online database server.

2. The method according to claim 1, **characterised in that**
- the operator is a public mobile telephony operator,
- a code relating to the identity of the debtor is issued at the same time as the transmission (68),
- the payment message is compiled on the basis of an information item regarding the identity of the debtor corresponding to this code.

3. The method according to claim 1, **characterised in that**
- the debtor's identity information item is transmitted (71) on a private telephone network (69) of the creditor,
- the payment message is dialled (71-73) on this network, and
- it is sent (70) to a financial institution of the creditor.

4. The method according to claim 1, **characterised in that**
- the identity information item is transmitted (74) on a public telephony network as part of a private communication (75), and
- the payment message is dialled and sent to a recipient of this private communication during the course thereof.

5. The method according to any of claims 1 to 4,
**characterised in that**
- the creditor's identity information item is called from a memory (18) in the central system by means of a code as the address for that memory.

6. The method according to any of claims 1 to 5,
**characterised in that** an account number of the debtor with a financial institution is used for the debtor's identity.

7. The method according to claim 6, **characterised in that**
- the debtor selects one of several (38) debtor identities from a memory in its mobile telephone,
- this debtor identity corresponding to one of the accounts of this debtor with one or more financial institutions.

8. The method according to any of claims 1 to 7,
**characterised in that**
- an actual information item and a string of consistency characters are transmitted in the debtor's identity information, and
- the authenticity of the payment message is verified (61) in the central system by processing the consistency characters.

9. The method according to any of claims 1 to 8,
**characterised in that**
- a verification session (62-64) of the secret code relating to the debtor is initiated with the central system.

10. The method according to any of claims 1 to 9,
**characterised in that**
- to send the message to a server (6) of a financial institution corresponding to this code, the central system reads connection information for this financial institution from one of its memories or from a memory of an online database server of the creditor, and
- the central system connects to this online database server of this financial institution.

11. The method according to any of claims 1 to 10, **characterised in that**
- to send from a mobile telephone, the debtor identity information is entered beforehand in a memory (35) of this mobile telephone.

12. The method according to claim 11, **characterised in that** this mobile telephone memory is realised as a removable memory (31), for example as a chipcard or a chip token.

13. The method according to any of claims 1 to 12, **characterised in that**
- the date is added to the payment message (5).

14. The method according to any of claims 1 to 13, **characterised in that**
- the financial institution corresponding to the code is an institution with which the creditor has an account.

15. The method according to any of claims 1 to 14, **characterised in that**
- a telephone message is sent to the creditor informing it that processing of the payment message has been completed.

## Patentansprüche

1. Elektronisches Zahlungsverfahren, bei dem
- von einem Mobiltelefon (7) eines Schuldners in Richtung eines Zentralsystems (10) eines Betreibers (13) eine Information über einen Betrag einer Transaktion und eine Information über eine Identität (39) eines Gläubigers gesendet wird (68, 71, 74),
- in diesem Zentralsystem eine Zahlungsmeldung auf Basis der erhaltenen Information über die Gläubigeridentität, auf Basis einer Information über das Schuldnerkonto und auf Basis der Information über den Transaktionsbetrag ergänzt wird (18, 19),
- diese Zahlungsmeldung an einen Datenserver (6) eines Finanzinstituts gesendet wird,
- der Datenserver dieses Finanzinstituts Bankgeldüberweisungen entsprechend dieser Zahlung durchführt,
**dadurch gekennzeichnet, dass**
- eine Information über das Gläubigerkonto oder ein für diese Meldung erforderlicher Betragswert aus einem Speicher eines Datenservers (19), der dem Gläubiger zur Verfügung steht, entnommen wird, indem die Information über die Gläubigeridentität als direkte oder indirekte Adresse dieses Datenservers des Gläubigers verwendet wird.

2. Verfahren nach Anspruch 1, **dadurch gekennzeichnet, dass**
- der Betreiber ein öffentlicher Mobiltelefonnetzbetreiber ist,
- zum Zeitpunkt des Sendens (68) auch ein Code über die Identität des Schuldners gesendet wird,
- die Zahlungsmeldung auf Basis einer Identitätsinformation des Schuldners entsprechend diesem Code gebildet wird.

3. Verfahren nach Anspruch 1, **dadurch gekennzeichnet, dass**
- die Identitätsinformation des Schuldners auf einem privaten Telefonnetz (69) des Gläubigers gesendet wird (71),
- die Zahlungsmeldung in (71-73) diesem Netz zusammengestellt wird und
- diese an ein Finanzinstitut des Gläubigers gesendet wird (70).

4. Verfahren nach Anspruch 1, **dadurch gekennzeichnet, dass**
- die Identitätsinformation auf einem öffentlichen Telefonnetz im Rahmen eines privaten Gesprächs (75) gesendet wird (74), und
- die Zahlungsmeldung an einen Gesprächspartner dieses privaten Gesprächs während seiner Abwicklung zusammengestellt und gesendet wird.

5. Verfahren nach einem der Ansprüche 1 bis 4, **dadurch gekennzeichnet, dass**
- die Gläubigeridentitätsinformation aus einem Speicher (18) des Zentralsystems entnommen wird, indem der Code als Adresse in diesem Speicher verwendet wird.

6. Verfahren nach einem der Ansprüche 1 bis 5, **dadurch gekennzeichnet, dass** als Schuldneridentität eine Kontonummer dieses Schuldners in einem Finanzinstitut verwendet wird.

7. Verfahren nach Anspruch 6, **dadurch gekennzeichnet, dass**
- der Schuldner in einem Speicher seines Mobiltelefons eine zu sendende Schuldneridentität unter mehreren (38) auswählt,
- wobei diese Schuldneridentität einem der Kontos dieses Schuldners in einem oder mehreren Finanzinstituten entspricht.

8. Verfahren nach einem der Ansprüche 1 bis 7, **dadurch gekennzeichnet, dass**
- in der Identitätsinformation des Schuldners eine eigentliche Identitätsinformation und eine Kohärenzzeichenkette übertragen wird, und
- in dem Zentralsystem die Echtheit der Zahlungsmeldung durch Bearbeitung der Kohärenzzeichen überprüft wird (61).

9. Verfahren nach einem der Ansprüche 1 bis 8, **dadurch gekennzeichnet, dass**
- mit dem Zentralsystem eine Überprüfungsreihe (62-64) eines mit dem Schuldner verbundenen Geheimcodes hervorgerufen wird.

10. Verfahren nach einem der Ansprüche 1 bis 9, **dadurch gekennzeichnet, dass**
- zur Entsendung der Meldung an einen Server (6) eines diesem Code entsprechenden Finanzinstituts das Zentralsystem in einem seiner Speicher oder in einem Speicher eines Datenservers des Gläubigers Anschlussinformationen dieses Finanzinstituts abliest, und
- sich das Zentralsystem an diesen Datenserver dieses Finanzinstituts anschließt.

11. Verfahren nach einem der Ansprüche 1 bis 10, **dadurch gekennzeichnet, dass**
- zum Senden von dem Mobiltelefon zuerst in einem Speicher (35) dieses Mobiltelefons die Schuldneridentitätsinformationen aufgezeichnet werden.

12. Verfahren nach Anspruch 11, **dadurch gekennzeichnet, dass** der Speicher dieses Mobiltelefons in Form eines abnehmbaren Speichers (31), beispielsweise vom Typ Chipkarte oder Chipjeton, ausgeführt ist.

13. Verfahren nach einem der Ansprüche 1 bis 12, **dadurch gekennzeichnet, dass**
- das Datum zu der Zahlungsmeldung (5) hinzugefügt wird.

14. Verfahren nach einem der Ansprüche 1 bis 13, **dadurch gekennzeichnet, dass**
- das dem Code entsprechende Finanzinstitut ein Institut ist, in dem der Gläubiger ein Konto besitzt.

15. Verfahren nach einem der Ansprüche 1 bis 14, **dadurch gekennzeichnet, dass**
- an den Gläubiger eine Telefonmeldung gesendet wird, die ihm die Beendigung der Bearbeitung der Zahlungsmeldung anzeigt.
